# EUROPEAN PATENT APPLICATION

(11) **EP 1 950 068 A2**
(43) Date of publication of application: **30.07.2008**
(21) Application number: 08250304.6
(22) Date of filing: 24.01.2008
(51) Int. Cl.: B60J 7/08

(54) **Trailer sheeting system**

(30) Priority: 24.01.2007 GB 0701270
(71) Applicant: Reload Systems Limited, Oldbury West Midlands B69 3EX (GB)
(72) Inventor: Redman, Terrence, WaIlasey, CH45 9LG (GB); Taylor, Michael, Worcestershire, WR9 7JB (GB)
(74) Representative: Ward, David Ian

(57) **Abstract**

The present invention provides sheeting system for use in covering the contents of a drawbar trailer container to prevent the contents from inadvertently leaving the container during transport. The system comprises a trailer, a flexible cover (10) fixed at one end to a flexible cover mounting means at a first end of the trailer and at a second end to flexible cover deployment means. First and second swinging arms (20,22) are each located at a first end (24) at a mid point of the trailer and at a second end to the flexible cover deployment means, and are moveable between a first position in which the swinging arms are located adjacent the flexible cover mounting means and a second position in which the swinging arms are located remote from the flexible cover mounting means.

## Description

The present invention relates to a sheeting system for use with drawbar trailers.

It is known to provide, for example, open topped containers for the transport of material from one location to another. Such containers may be provided at one end with releasable doors such that when opened and the container is tipped the contents of the container are allowed to empty from the container.

The internal dimensions of such containers as defined within the side walls of the container are generally fixed to provide a predetermined cubic capacity. However, the external dimensions are not so constrained and a variety of hinge mechanisms and locking mechanisms are provided that extend laterally of the container.

Such containers are provided at a first location, for example where the container is loaded with contents to be transported, prior to be transport to a second location, for example for emptying of the container. Such containers will be loaded onto a transportation vehicle for transport between the first and second locations. It is a requirement that while transported the container is covered with a sheet or other flexible cover to prevent the contents of the container from inadvertently leaving the container during transport.

It is known to transport such demountable containers on vehicles provided with a load bed located to the rear of a vehicle cab. The container is mounted onto the load bed and then covered. However, it is increasingly the case that such containers are carried on trailers designed to be carried behind a vehicle. It is to this second situation that the present invention is directed.

With the first kind of vehicle described above, the flexible cover is stored and withdrawn from a storage compartment located within a sheeting tower, which may be fixed or vertically adjustable, located between the cab and the container when located on the load bed. The cover is deployed from the storage compartment by a pair of swinging arms fixed at a mid point of the load bed, over the container, from the front of the vehicle to the rear. Also, because of the manner of loading the container on the vehicle, in which the doors of the container are located to the rear of the load bed, the container is covered from the front to the back of the container. It will be understood that when the cover is retracted, the arms extend from the mid point of the vehicle to the sides of the storage compartment.

Adapting this system for use with a cab and trailer arrangement presents problems. For example, if the sheeting tower is mounted to the trailer at an end to be connected to the cab, the sheeting tower is in the way of the loading equipment provided on the cab when seeking to load the trailer from this end. If the trailer is to be loaded from the non-tower end, it is necessary for the container to pass through the arms mounted on the sides of the vehicle. While the side walls of the container will pass between the arms, there is a danger that the hinges and the locking mechanisms located at and extending beyond the sides of the container will catch on the arms causing unwanted damage either to these parts of the container or the swinging arms.

If the sheeting tower is located at the other end of the trailer, the non-loading end, the sheeting system now has to cover the container from back to front. While the side of the container pass between the arms of the sheeting system, the arms still have to pass over the hinges and locking mechanisms presenting the problem identified above.

Alternatively, if the tower is mounted on the cab, it must be arranged to cover both the loading equipment and the trailer and requires separate, inconvenient connection of the flexible cover to the arms mounted on the trailer each time the flexible cover is to be deployed over a newly loaded container.

It is an advantage of the present invention that it overcomes the problems identified above.

According to the present invention, a sheeting system comprises a trailer, a flexible cover fixed at one end to a flexible cover mounting means at a first end of the trailer and at a second end to flexible cover deployment means, first and second swinging arms each located at a first end at a mid point of the trailer and at a second end to the flexible cover deployment means, in which the swinging arms are moveable between a first position in which the swinging arms are located adjacent the flexible cover mounting means and a second position in which the swinging arms are located remote from the flexible cover mounting means.

It will be understood that, in some embodiments of the present invention, the flexible cover may be permanently fixed to the flexible cover mounting means. In other embodiments of the present invention, the flexible cover may be detachable from the flexible cover mounting means. The flexible cover mounting means may comprise one or more attachment points on the trailer to which the flexible cover is directly attached. Alternatively, the flexible cover may be connected to the trailer by means of one or more linking means, such as for example a flexible linking means such as a rope or chain.

It is an advantage of some embodiments of the present invention that a container may be loaded onto the trailer over the sheeting system. Once the container is in position on the trailer, the swinging arms pivot from the first position over the container to the second position, covering the container with the flexible cover.

Preferably the swinging arms are linearly extendable. More preferably, the extension of the swinging arms is driven by pneumatic or hydraulic means.

Preferably pivoting of the swinging arms is driven by either pneumatic or hydraulic means.

Preferably the swinging arms are laterally extendable. More preferably, the lateral extension of the swinging arms is driven by pneumatic or hydraulic means.

The invention will now be described, by way of example only, with reference to the accompanying drawings, in which:-
Figure 1 shows a schematic side view of a first embodiment of a sheeting system according to the present invention in a stowed position;
Figure 2 shows a schematic side view of the embodiment shown in Figure 2, illustrating the sheeting system in a variety of positions;
Figure 3 shows a side view of the sheeting system omitting the trailer;
Figure 4 shows a plan view of Figure 3; and
Figure 5 shows a schematic side view of a second embodiment of the present invention according to the present invention in a stowed position.

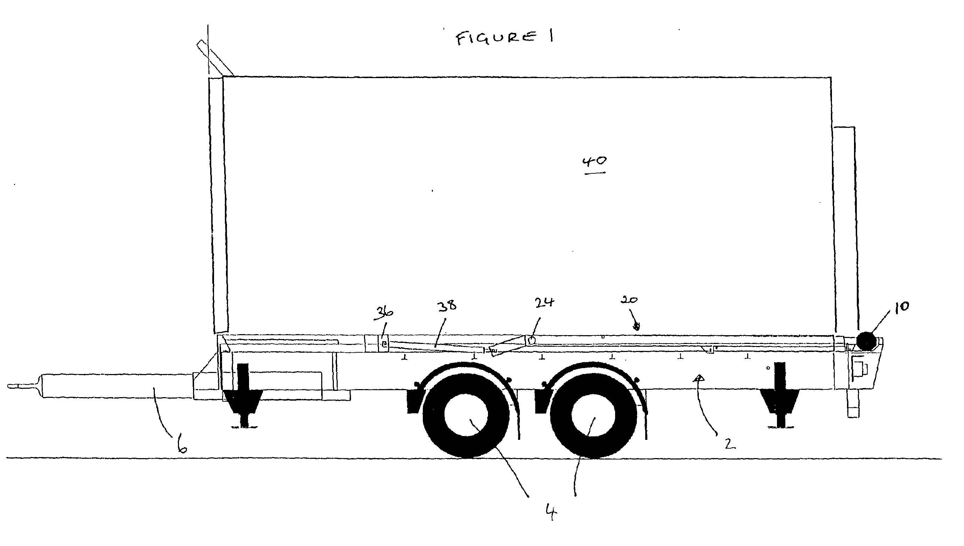

Referring first to Figure 1 there is shown a trailer for use with a towing vehicle provided with means for mounting a container on the trailer. The trailer may be of any suitable kind, for example of the fixed neck or sliding neck kind. In use, the neck is adapted for connection with a draw beam on the towing vehicle. The trailer shown in Figure 1 comprises a chassis 2 provided with a plurality of wheeled axles 4. A neck 6 is provided to a first end of the chassis 2.

In the embodiment of Figure 1, at a second end of the chassis 2 first and second mounting means are provided to each side of the chassis 2. A first lateral bar is mounted between the first and second mounting means. A flexible cover 10 having first and second ends is mounted at the first end on the first lateral bar. In an alternative embodiment, not shown, the first end of the flexible cover is secured by other suitable means to the chassis.

The second end of the flexible cover 10 is mounted to a second lateral bar 12. The second lateral bar 12 is mounted for rotation between first and second mounting means 14,16. The flexible cover 10 is wound onto the second lateral bar 12 prior to securing the first end of the flexible cover 10. Conveniently the second lateral bar 12 may be spring loaded or clutched to draw the flexible cover 10 onto the second lateral bar 12. Alternatively, the first lateral bar may be spring loaded or clutched to draw the flexible cover onto the first lateral bar.

The first and second mounting means to which the second lateral bar is mounted are themselves mounted on first and second swinging arms 20,22 mounted to each side of the chassis. Since each swinging arm is substantially identical, only the first swinging arm 20 will be described. However, the structure of the second swinging arm will be understood by reference to the description of the first.

The first swinging arm 20 is mounted towards a first end at a first pivot point 24 for pivoting movement to a mid point of the chassis 2. The first mounting means 14 to which the second lateral bar 12 is mounted is provided towards a second end of the first swinging arm 20.

The first swinging arm 20 conveniently comprises a sleeve 26 within which a displaceable element 28 is located. The displaceable element 28 conveniently takes the form of a bar or rod slidable within the sleeve 26. A first end of the displaceable element 28 is located within the sleeve 26 and a second end of the displaceable element (corresponding to the second end of the first arm) is provided with the first mounting means 14 to which the second lateral bar 12 is mounted. The displaceable element 28 is driven for movement within the sleeve 26 by any suitable first drive means 30 for example by a hydraulic or pneumatic ram means.

The sleeve 26 is mounted towards a first end at the first pivot point 24 for pivoting movement to the chassis 2. A kink or elbow is provided in the sleeve 26 at the first end beyond the first pivot point 24. The first end of the sleeve 26 is pivotally connected at a second pivot point 32 to a second end of a suitable second drive means 38 such as a pneumatic or hydraulic ram. A first end of the second drive means 38 is pivotally connected at a third pivot point 34 to a fixed mounting member 36 mounted in any suitable manner from the chassis 2.

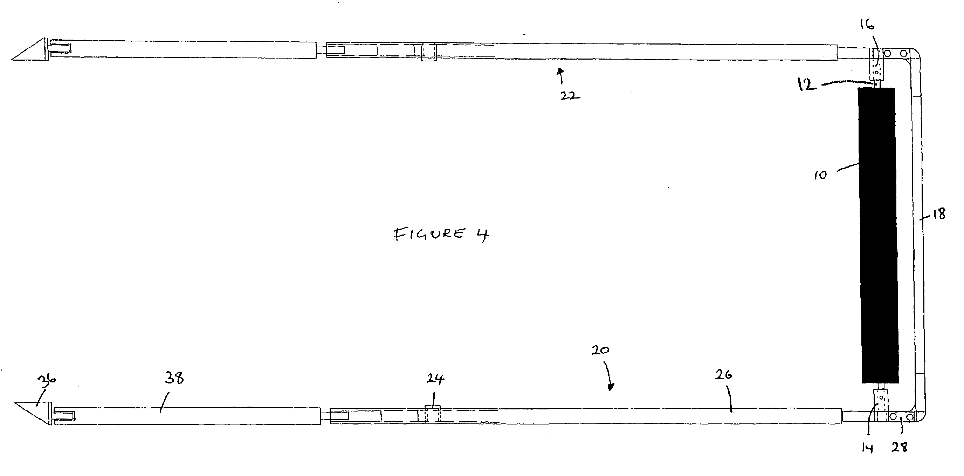

Conveniently a third lateral bar 18 extends between the first ends of the displaceable elements 28 of the first and second arms (Figure 4).

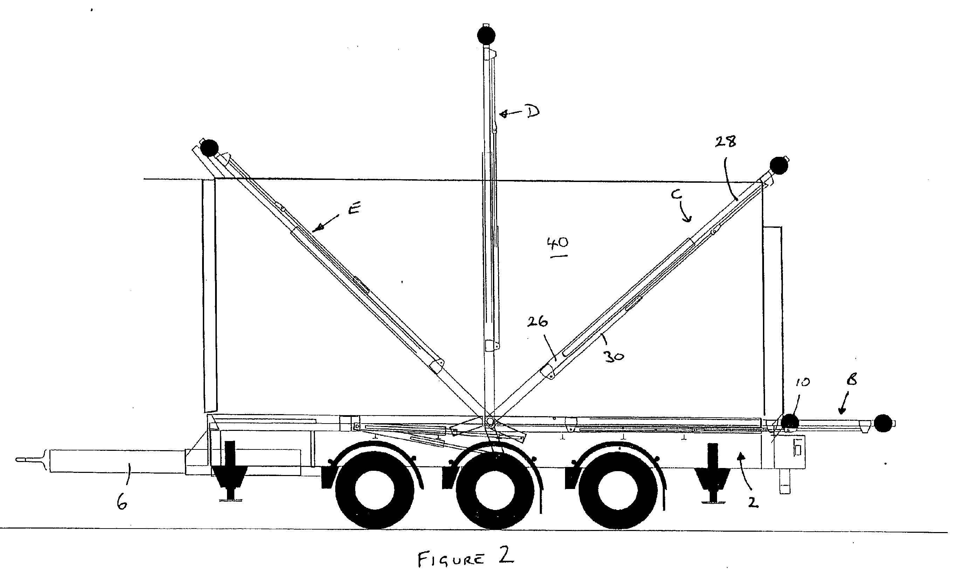

Operation of the sheeting system will now be described by reference to Figures 1 and 2. A container 40 is loaded or drawn onto the chassis 2 by any suitable means, conveniently the equipment fitted to the towing vehicle to the position shown in the Figures 1 and 2 such that the rear of the container 40, at which the hinges and door locking mechanisms of the container 40 are located are to the front of the chassis 2.

The first drive means 30 are used to extend the displaceable elements 28 from the sleeves 26, from the position shown in Figure 1 to the position labelled as B in Figure 2 extending the flexible cover 10 out from the first transverse bar. The second drive means 38 are then actuated to drive the sleeves 26 about the first pivot point 24, first raising the second lateral bar 12 and the deploying flexible cover 10 to a level above an upper part of the container 40 at a first end of the container (position C), passing the second lateral bar 12 over the container (position D) to a second end of the container (position E) all the while drawing the flexible cover 10 over the container 40. It can be seen that the flexible cover 10 is deployed from the rear to the front of the chassis 2 covering the container 40 from the front of the container 40 to the rear of the container 40.

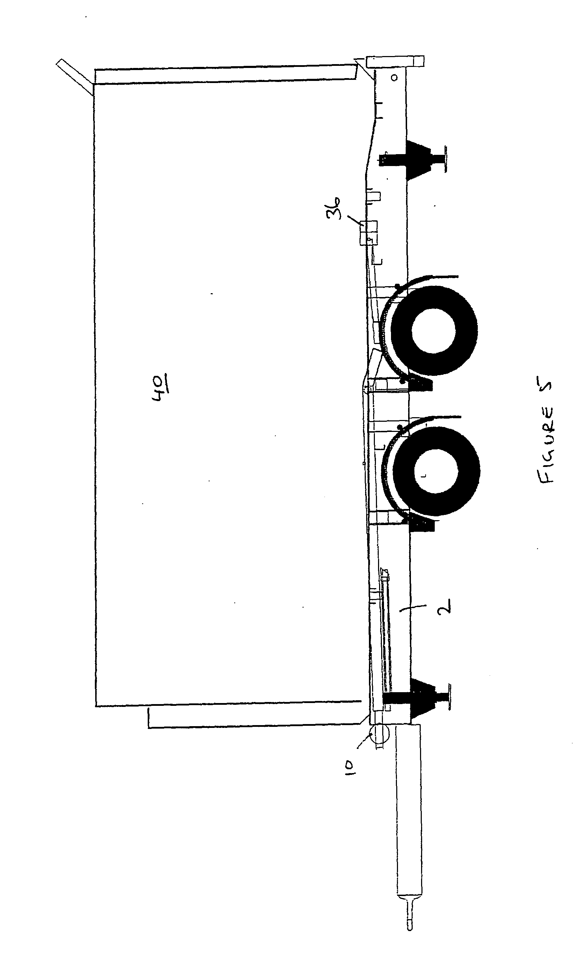

In Figure 5, a second embodiment of the present invention is illustrated. Like parts are referred to by like reference numerals. The first lateral bar, by which the flexible cover 10 is held fixed in relation to the chassis 2 is located to the front of the chassis 2. The swinging arms 20,22 are mounted in a similar manner to the previous embodiment towards their second ends at a mid point of the chassis about a first pivot point. However the fixed mounting point 36 by which the second drive means 38 are connected to the chassis 2 mounted is located towards a rear end of the chassis 2. The container 40 is loaded onto the chassis 2 such that the rear of the container 40 is directed to the rear of the chassis 2. The flexible cover 10 is deployed from the front of the chassis 2 to the rear covering the container 40 from the front of the container 40 to the rear.

In a further modification, applicable to either embodiment the swinging arms are connected at the first pivot point such that the arms may be displaced laterally of the chassis. The lateral extension of the swinging arms is driven by any suitable means, for example by pneumatic or hydraulic means. In such an embodiment, the first, second and third lateral bars are also adapted to accommodate the changes in the lateral dimensions of the sheeting system.

The controls for the drive means for operation of the linear extension of the swinging arms and the pivoting of the swinging arms (and the lateral extension of the swinging arms where provided for) conveniently may be mounted on the chassis, but may be provided in separate unit communicating with control units for the actuation of such drive means.

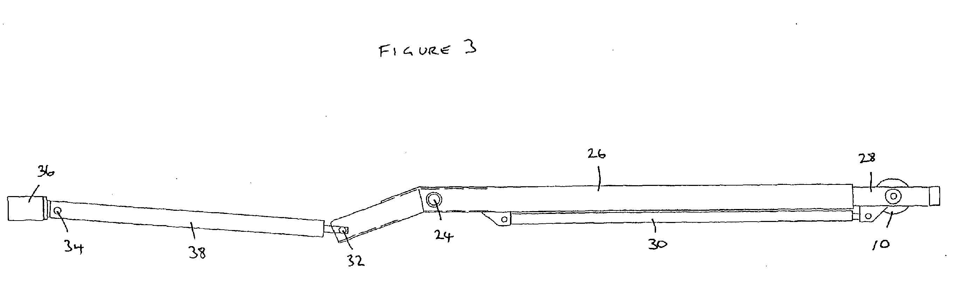

Each first drive means 30 is shown in Figures 2 and 3 located externally to the sleeve 26 and displaceable element 28 to which it is attached. However, it will be appreciated that, in an alternative construction, a first drive means 30 (for example, a hydraulic or pneumatic ram means) may be located within the sleeve 26.

## Claims

1. A sheeting system, comprising a trailer, a flexible cover (10) fixed at one end to a flexible cover mounting means at a first end of the trailer and at a second end to flexible cover deployment means, first and second swinging arms (20, 22) each located at a first end (24) at a mid point of the trailer and at a second end to the flexible cover deployment means, in which the swinging arms are moveable between a first position in which the swinging arms are located adjacent the flexible cover mounting means and a second position in which the swinging arms are located remote from the flexible cover mounting means.

2. The sheeting system of claim 1, wherein the flexible cover is permanently fixed to the flexible cover mounting means.

3. The sheeting system of claim 1, wherein the flexible cover is detachable from the flexible cover mounting means.

4. The sheeting system of any previous claim, wherein the swinging arms are linearly extendable.

5. The sheeting system of claim 4, wherein each swinging arm comprises a sleeve (26) and a displacement element (28) located within the sleeve, such that the displacement element is linearly displaceable with respect to the sleeve.

6. The sheeting system of claim 4 or claim 5, further comprising at least one of pneumatic and hydraulic means (30) for linear extension of the swinging arms.

7. The sheeting system of claim 6 when dependent on claim 5, wherein the at least one of pneumatic and hydraulic means is located outside the sleeve.

8. The sheeting system of claim 6 when dependent on claim 5, wherein the at least one of pneumatic and hydraulic means is located within the sleeve.

9. The sheeting system of any previous claim, further comprising at least one of pneumatic and hydraulic means (38) for moving the swinging arms between the first and second positions.

10. The sheeting system of any previous claim, wherein the flexible cover deployment means is arranged to draw the flexible cover into a rolled configuration when the swinging arms are in the first position.
